# EUROPÄISCHE PATENTSCHRIFT

(11) **EP 1 127 448 B1**
(45) Veröffentlichungstag und Bekanntmachung des Hinweises auf die Patenterteilung: **22.10.2003**
(21) Anmeldenummer: 99952276.6
(22) Anmeldetag: 04.08.1999
(51) Int. Cl.: H04M 11/06, H04B 7/24

(54) **VERFAHREN ZUM STEUERN DER DATENÜBERTRAGUNG IN EINEM SCHNURLOSEN V.24 -DATENÜBERTRAGUNGSSYSTEM, WELCHES ZWISCHEN EINEM DATENENDGERÄT UND EINER DATENSENDEVORRICHTUNG FÜR TELEKOMMUNIKATIONSDATEN BENUTZT WIRD**
METHOD FOR CONTROLLING DATA TRANSMISSION IN A WIRELESS V.24 DATA TRANSMISSION SYSTEM OPERATING BETWEEN A DATA TERMINAL AND A DATA TRANSMISSION DEVICE FOR DATA TELECOMMUNICATION
PROCEDE POUR COMMANDER LA TRANSMISSION DE DONNEES DANS UN SYSTEME DE TRANSMISSION DE DONNEES V.24 SANS FIL EXPLOITE ENTRE UN TERMINAL ET UN DISPOSITIF DE TRANSMISSION DE DONNEES POUR LA TELECOMMUNICATION DE DONNEES

(30) Priorität: 12.08.1998 DE 19836610
(43) Veröffentlichungstag der Anmeldung: 29.08.2001
(73) Patentinhaber: SIEMENS AKTIENGESELLSCHAFT, 80333 München (DE)
(72) Erfinder: GARCIA ALFARO, Diego, D-22869 Schenefeld (DE); BIEDERMANN, Rolf, D-48683 Ahaus (DE)
(86) Internationale Anmeldenummer: DE9902418
(87) Internationale Veröffentlichungsnummer: WO00010291

(56) Entgegenhaltungen:
- WO-A-97/41700
- US-A- 5 142 538

## Beschreibung

Verfahren zum Steuern der Datenübertragung in einem schnurlosen zwischen einer Datenendeinrichtung und einer Datenübertragungseinrichtung zur Daten-Telekommunikation betriebenen V.24-Datenübertragungssystem

Daten-Telekommunikation (Datel) ist das gegenseitige Senden und Empfangen von Daten bzw. Datensignalen (Paketdaten) zwischen einer Datenendeinrichtung - z.B. Personal Computer, Daten-Terminals, DV-Anlagen etc. - und einer fernen Datenendeinrichtung - z.B. Personal Computer, Daten-Terminals, DV-Anlagen etc. - über ein Telekommunikationsnetz, beispielsweise ein öffentliches Telekommunikationsnetz (Stw.: ISDN, PSTN etc.). Damit die von der Datenendeinrichtung gesendeten Daten bzw. Datensignale über das Telekommunikationsnetz übertragen werden können, ist zwischen der Datenendeinrichtung und dem Telekommunikationsnetz eine netztechnische Einrichtung, die sogenannte Datenübertragungseinrichtung, vorgesehen. Die am weitesten verbreitete Datenübertragungseinrichtung ist neben der PC-Karte (früher: PCMCIA-Karte) das Modem (Kunstwort aus Modulator/Demodulator) [vgl. hierzu u.a. das Gebrauchsmuster DE 297 14 588 U1].

Das Modem ist eine auf der Grundlage des Trägerstromverfahrens arbeitende elektrische Datenübertragungseinrichtung für den Einsatz auf analogen Übertragungswegen begrenzter Bandbreite - z.B. Telekommunikationsleitungen (z.B. a/b-Leitungspaar, ISDN-S₀-Bus etc.) des Telekommunikationsnetzes, das digitale Datensignale in analoge Datensignale und umgekehrt umwandelt und überträgt. In Modem's sind ferner eine Vielzahl von durch die International Telecommunication Union - Telecommunication Standards (ITU-T) standardisierte Verfahren der V-Serie implementiert bzw. realisiert.

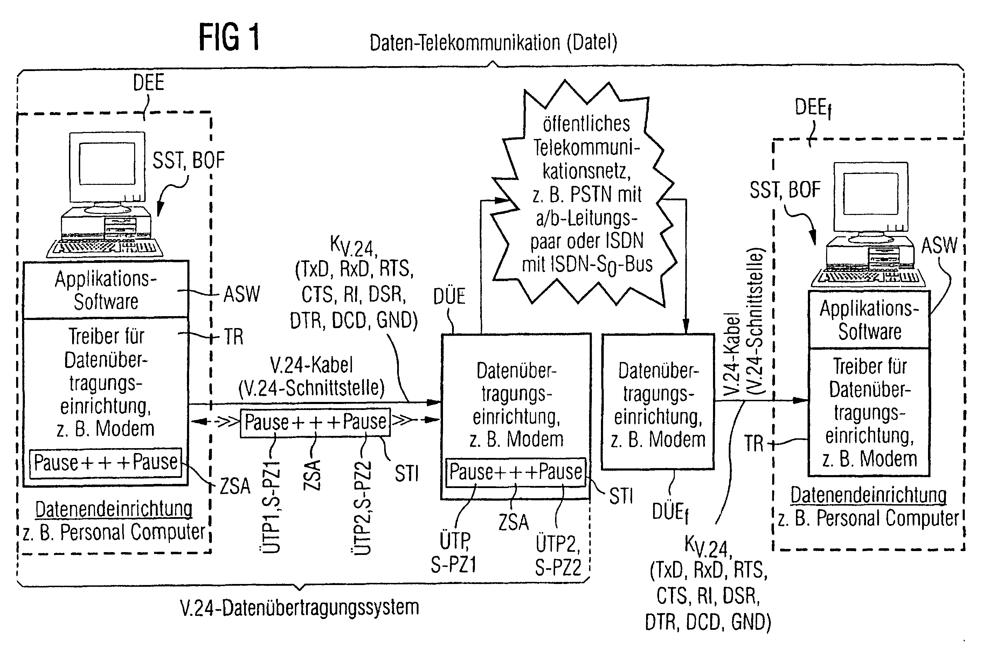

FIGUR 1 zeigt ein Daten-Telekommunikation-Szenario auf der Basis eines V.24-Datenübertragungssystems. Ein V.24-Datenübertragungssystem ist dabei über ein öffentliches - z.B. ein ein a/b-Leitungspaar aufweisendes PSTN (Public **S**witched **T**elecommuncation **N**etwork) oder ein einen ISDN-S₀-Bus aufweisendes ISDN (**I**ntegrated **S**ervices **D**igital **N**etwork) - Telekommunikationsnetz mit einem fernen V.24-Datenübertragungssystem verbunden. Das V.24-Datenübertragungssystem weist eine z.B. als Personal Computer ausgebildete Datenendeinrichtung DEE und eine z.B. als Modem ausgebildete Datenübertragungseinrichtung DÜE auf, die über ein V.24-Kabel (V.24-Schnittstelle) K_{V.24} miteinander verbunden sind.

In Analogie dazu weist das ferne V.24-Datenübertragungssystem eine z.B. als Personal Computer ausgebildete ferne Datenendeinrichtung DEE_{f} und eine z.B. als Modem ausgebildete ferne Datenübertragungseinrichtung DÜE_{f} auf, die ebenfalls über ein V.24-Kabel (V.24-Schnittstelle) K_{V.24} miteinander verbunden sind.

Die Datenendeinrichtung DEE, DEE_{f} enthält eine Systemsteuerung SST mit Bedienoberfläche BOF, eine Applikationssoftware ASW und einen Treiber TR als Anpassungsglied zwischen Software (Applikationssoftware) und Hardware (Datenübertragungseinrichtung bzw. Modem).

Der Treiber TR ist Modem-Hersteller-spezifisch und vorzugsweise als CAPI-Treiber (**C**ommon ISDN **A**pplication **P**rogrammable **I**nterface; standardisierte Kommunikationsschnittstelle zur Anwendersoftware für die fehlertolerante ISDN-Telekommunikation mit dem Personal Computer) oder als TAPI-Treiber (**T**elephone **A**pplication **P**rogrammable **I**nterface) ausgebildet.

Eine Vielzahl der auf dem Markt erhältlichen Datenübertragungseinrichtungen DÜE, z.B. analoge Modem's und PC-externe ISDN-Terminal Adapter, werden über einen HAYES-Befehlssatz (HAYES-Standard) gesteuert. Der HAYES-Standard ist ursprünglich ein amerikanischer Industrie-Standard für die Modemkommunikation, insbesondere für die Modemsteuerung durch die Datenendeinrichtung DEE gewesen. Er wird auch als AT-Standard bezeichnet, weil fast alle Kommandos des HAYES-Befehlssatzes mit dem Prefix "AT" (**AT**tention) mit den ASCII-Zeichen A und T beginnen. Der inzwischen weltweit eingeführte Standard ist Gegenstand einer ITU-Empfehlung (International Telecommunication Union) mit der Bezeichnung "ITU-T V.25ter". Statt des Prefix "AT" können auch der Prefix "at", der Prefix "A/" oder der Prefix "a/" verwendet werden.

Mit Hilfe der AT-Kommandos wird in einem Kommandodatenübertragungsmodus ("Kommando-Modus") an der Datenübertragungseinrichtung (Modem) DÜE unter anderem der Verbindungsaufbau zu der fernen Datenübertragungseinrichtung DÜE_{f} (Modem) am fernen Ende der Telefonleitung gesteuert. Ist dieser Verbindungsaufbau erfolgreich, schaltet das Modem vom ursprünglichen "Kommando-Modus" in einen Nutzdatenübertragungsmodus - den sogenannten "Transparent-Modus". Das heißt, es besteht eine "Point-To-Point"-Verbindung ("Ende-zu-Ende"-Verbindung) mit dem Modem am fernen Ende. In diesem Modus erfolgt die eigentliche Nutzdatenübertragung der Applikationssoftware ASW. Die Interpretation von AT-Kommandos ist hierbei ausgeschaltet, um eine ungewollte Interpretation von zufälligen "AT"-Zeichenfolgen im Nutzdatenstrom zu verhindern. Hieraus ergibt sich jedoch unweigerlich, daß es kein AT-Kommando geben kann, mit dem vom "Transparent-Modus" zurück in den "Kommando"-Modus geschaltet werden kann.

Um dennoch ein Umschalten zu ermöglichen, wird in einem Nutzdatenübertragungsmodus des schnurlosen V.24-Datenübertragungssystems eine von dem Benutzer der Datenendeinrichtung DEE veränderbare zeitkritische Steuerinformation (Steuerkommando) STI, bestehend aus einer ersten Übertragungspause ÜTP1 mit einer erste SOLL-Pausenzeit S-PZ1, einem sich daran anschließenden Zeichensatz (Zeichenfolge) ZSA und einer sich daran anschließenden zweiten Übertragungspause ÜTP2 mit einer zweiten SOLL-Pausenzeit S-PZ2, mit festgelegtem "Timing" in einem Nutzdatenstrom NDS von der Datenendeinrichtung DEE zur Datenübertragungseinrichtung DÜE übertragen. Diese Steuerinformation STI ist sowohl dem Modem-Treiber TR der Datenendeinrichtung DEE als auch der Datenübertragungseinrichtung DÜE bzw. dem Modem bekannt. Die Wahrscheinlichkeit, daß diese Steuerinformation STI mit genau dem festgelegten "Timing" im Nutzdatenstrom NDS auftritt, ist äußerst gering. Man nennt diese Steuerinformation STI auch ESCAPE-Sequenz und sie wird üblicherweise durch codierte ASCII-Zeichen der Form "Pause+++Pause" angegeben, wobei die Information "Pause" einen festgelegten Minimalwert hat. Die Information "Pause" vor dem ersten "+"-Zeichen des Zeichsatzes ZSA gibt die Pausenzeit der ersten Übertragungspause ÜTP1 an, während die Information "Pause" nach dem letzten "+"-Zeichen des Zeichsatzes ZSA die Pausenzeit der zweiten Übertragungspause ÜTP2 angibt.

Das V.24-Kabel bzw. die V.24-Schnittstelle K_{V.24} unterstützt gemäß der ITU-T Spezifikation V.24, März 1993, Seiten 1 bis 19 den Modembetrieb an einen Personal Computer durch verschiedene Leitungen (Statusleitungen). Dieses sind:
1. Eine Sendedatenleitung TxD für die Datenübertragung,
2. eine Empfangsdatenleitung RxD für die Datenübertragung,
3. eine RTS-Leitung (**R**eady **T**o **S**end) RTS für die Übertragungsart "Hardware-Handshake" zur Übertragung des Zustands "READY TO SEND" (Zustand "RTS"),
4. eine CTS-Leitung (**C**lear **T**o **S**end) CTS für die Übertragungsart "Hardware-Handshake" zur Übertragung des Zustands "CLEAR TO SEND" (Zustand "CTS"),
5. eine RI-Leitung (**R**ing **I**ndication) RI zur Ruferkennung am Modem,
6. eine DSR-Leitung (**D**ATA **S**ET **R**EADY) DSR, auf der das Modem dem Personal Computer meldet, daß es eingeschaltet ist,
7. eine DTR-Leitung (**D**ATA **T**ERMINAL **R**EADY) DTR, auf der der Personal Computer dem Modem meldet, daß er eingeschaltet ist und bereit ist, Verbindungen aufzunehmen,
8. eine DCD-Leitung (**D**ATA **C**HANNEL **D**ETECTION) DCD, auf der das Modem dem Personal Computer meldet, daß es die Verbindung zu einem fernen Modem aufgenommen bzw. aufgebaut hat,
9. eine Masseleitung (**G**rou**ND**) GND.

Weist das V.24-Kabel bzw. die V.24-Schnittstelle K_{V.24} die vorstehend aufgezählten neun Leitungen nicht auf, sondern weniger als neun, z.B. sieben, so kann dieses 7-polige Kabel den Modembetrieb an dem Personal Computer dennoch unterstützen. Dies geschieht dadurch, daß statt des "Hardware-Handshake" auf den RTS/CTS-Leitungen eine Übertragungsart "Software-Handshake" zur Übertragung der Zustände "RTS", "CTS" - z.B. mittels eines XON/XOFF-Protokolls - auf den Sende/Empfangsdatenleitungen TxD, RxD durchgeführt wird. Bei dem "Software-Handshake" werden in der Datenendeinrichtung DEE und der Datenübertragungseinrichtung DÜE der zwischen der Datenendeinrichtung DEE und der Datenübertragungseinrichtung DÜE übertragene Datenstrom analysiert, alle "Software-Handshake-Zeichen" interpretiert und dementsprechend Maßnahmen eingeleitet.

Das in FIGUR 1 dargestellte schnurgebundene V.24-Datenübertragungssystem weist für ein Anwendungsszenario, bei dem die Datenendeinrichtung DEE und die Datenübertragungseinrichtung DÜE räumlich, z.B. über mehrere Meter, voneinander getrennt sind, den Nachteil auf, daß erstens für die Daten-Telekommunikation ein bezüglich der räumlichen Anordnung von Datenendeinrichtung DEE und Datenübertragungseinrichtung DÜE entsprechend langes V.24-Kabel K_{V.24} erforderlich ist und daß zweitens für die Installation des Systems bei derartigen Kabellängen ein großer nicht vernachlässigbarer Aufwand zur Verlegung des Kabels anfällt.

In Analogie zur Schnurlos-Telefonie ist es deshalb wünschenswert und auch vorstellbar, das schnurgebundene V.24-Datenübertragungssystem gemäß FIGUR 1 durch ein schnurloses V.24-Datenübertragungssystem zu ersetzen.

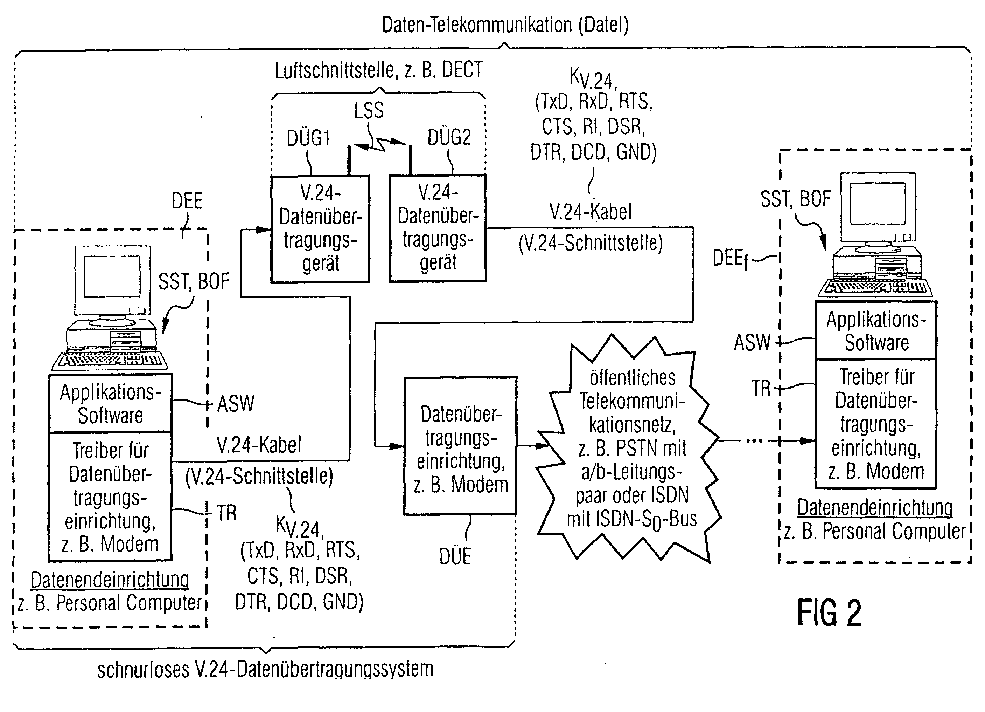

FIGUR 2 zeigt ausgehend von FIGUR 1 ein solches schnurloses V.24-Datenübertragungssystem zur Daten-Telekommunikation. Das in FIGUR 2 nicht vollständig dargestellte ferne V.24-Datenübertragungssystem kann entweder gemäß FIGUR 1 schnurgebunden oder wie das schnurlose V.24-Datenübertragungssystem in FIGUR 2 schnurlos sein. Bei dem schnurlosen V.24-Datenübertragungssystem sind gegenüber dem schnurgebundenen V.24-Datenübertragungssystem in FIGUR 1 das V.24-Kabel bzw. die V.24-Schnittstelle K_{V.24} zwischen der Datenendeinrichtung DEE und der Datenübertragungseinrichtung DÜE aufgetrennt und an den beiden durch die Trennung hervorgerufenen Enden des Kabels jeweils ein Datenübertragungsgerät angeschlossen.

Die beiden Datenübertragungsgeräte, ein mit der Datenendeinrichtung DEE durch das V.24-Kabel bzw. die V.24-Schnittstelle K_{V.24} verbundenes erstes Datenübertragungsgerät DÜG1 und ein mit der Datenübertragungseinrichtung DÜE durch das V.24-Kabel bzw. die V.24-Schnittstelle K_{V.24} verbundenes zweites Datenübertragungsgerät DÜG2, sind durch eine Luftschnittstelle LSS zur drahtlosen Telekommunikation miteinander verbunden.

Luftschnittstellen sind drahtlose Telekommunikationsschnittstellen, bei denen Nachrichten über eine Fernübertragungsstrecke zwischen einer Nachrichtenquelle (z.B. erstes Datenübertragungsgerät DÜG1) und einer Nachrichtensenke (z.B. zweites Datenübertragungsgerät DÜG2) drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT [**D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards",* Seiten *23 bis 29* **in Verbindung mit** der ETSI-Publikation *ETS 300175-1...9, Oktober 1992* und der DECT-Publikation des *DECT-Forum, Februar 1997, Seiten 1 bis 16],* GSM [**G**roupe **S**péciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale europäische Mobilfunknetze", Seiten 137 bis 152* **in Verbindung mit** der Publikation *telekom praxis 4*/*1993, P.Smolka "GSM-Funkschnittstelle - Elemente und Funktionen", Seiten 17 bis 24*], UMTS [vgl. *Funkschau 6*/*98: R.Sietmann "Ringen um die UMTS-Schnittstelle", Seiten 76 bis 81*] WACS oder PACS, IS-54, IS-95, PHS, PDC etc. [**v**gl. IEEE Communications Magazine, January 1995, Seiten 50 bis 57; D.D. Falconer et al:"Time Division Multiple Access Methods for Wireless Personal Communications"**]** übertragen werden.

In FIGUR 2 ist als Luftschnittstelle LSS vorzugsweise die DECT-Luftschnittstelle vorgesehen. Die DECT-Technologie ist gemäß der Publikation *"Vortrag von A. Elberse, M. Barry, G. Fleming zum Thema: "DECT Data Services - DECT in Fixed and Mobile Networks", 17.*/*18. Juni 1996, Hotel Sofitel, Paris; Seiten 1 bis 12 und Zusammenfassung"* wird - ausgehend von der Druckschrift *"Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und den Druckschriften *Components 31 (1993), Heft 6, Seiten 215 bis 218; S. Althammer, D. Brückmann: "Hochoptimierte IC's für DECT-Schnurlostelefone" und* WO 96/38991 (vgl. Figuren 5 und 6 mit der jeweils dazugehörigen Beschreibung) - die prinzipielle Verwendbarkeit der DECT-Technologie (Digital Enhanced Cordless Telecommuncation) für die drahtlose mobile Fernübertragung von Sprach- und/oder Paketdaten geeignet, bei der der Benutzer durch die DECT-Netzzugriffstechnologie in bezug auf die Fernübertragung von Nutzdaten sowohl zum eigenen Netzbetreiber werden kann als auch eine Zugriffsmöglichkeit zu einem übergeordneten Telekommunikationsnetz hat.

Die der Erfindung zugrundeliegende Aufgabe besteht darin, in einem schnurlosen zwischen einer Datenendeinrichtung und einer Datenübertragungseinrichtung zur Daten-Telekommunikation betriebenen V.24-Datenübertragungssystem die Übertragung von Steuerkommandos bzw. Steuerinformationen für die Datenübertragungseinrichtung von der Datenendeinrichtung zur Datenübertragungseinrichtung derart zu steuern, daß die Erkennbarkeit der Steuerkommandos bzw. Steuerinformationen für die Datenübertragungseinrichtung sichergestellt ist.

Diese Aufgabe wird durch die Merkmale des Patentanspruches 1 gelöst.

Die der Erfindung zugrundeliegende Idee besteht darin, daß in einem schnurlosen zwischen einer Datenendeinrichtung (z.B. einem Personal Computer) und einer Datenübertragungseinrichtung (z.B. einem Modem) zur Daten-Telekommunikation betriebenen V.24-Datenübertragungssystem mit einem mit der Datenendeinrichtung über ein V.24-Kabel verbundenen ersten Datenübertragungsgerät und mit einem mit der Datenübertragungseinrichtung über ein V.24-Kabel verbundenen zweiten Datenübertragungsgerät, die ihrerseits durch drahtlose Telekommunikation über eine Luftschnittstelle verbindbar sind, nach der Bekanntmachung des zeitkritischen Steuerkommandos, z.B. der ESCAPE-Sequenz, in den Datenübertragungsgeräten die zeitliche Abfolge der Übertragung des Steuerkommandos auf der Übertragungsstrecke zwischen dem zweiten Datenübertragungsgerät und der Datenübertragungseinrichtung nach erfolgter Übertragung auf der Übertragungsstrecke zwischen dem ersten Datenübertragungsgerät und der Datenendeinrichtung trotz der durch die Luftschnittstelle bedingte asynchronen Datenübertragung in dem schnurlosen V.24-Datenübertragungssystem durch das Einhalten der in dem Steuerkommando enthaltenen Zeitinformation (z.B. die in der ESCAPE-Sequenz enthaltenen Pausenzeiten) identisch rekonstruiert wird.

Vorteilhafte Weiterbildungen der Erfindung sind in den Unteransprüchen angegeben.

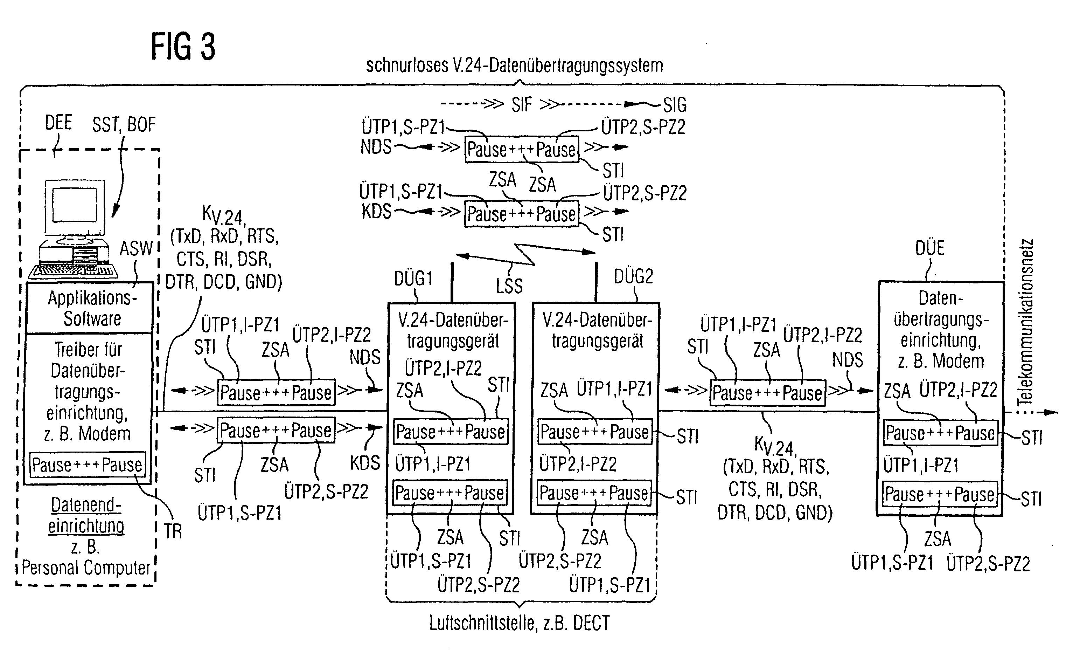

Ein Ausführungsbeispiel der Erfindung wird anhand der FIGUR 3 erläutert.

FIGUR 3 zeigt das schnurlose V.24-Datenübertragungssystem gemäß FIGUR 2, bei dem die Datenübertragung wie folgt gesteuert wird:

Bei Inbetriebnahme des schnurlosen V.24-Datenübertragungssystems bzw. beim Einschalten der Datenendeinrichtung DDE, der Datenübertragungseinrichtung DÜE und den V.24-Datenübertragungsgeräten DÜG1, DÜG2 werden die V.24-Datenübertragungsgeräte DÜG1, DÜG2, die Datenendeinrichtung DEE und die Datenübertragungseinrichtung DÜE in einem Kommandodatenübertragungsmodus betrieben, in dem Kommandodaten zwischen der Datenendeinrichtung DEE und der Datenübertragungseinrichtung DÜE über das V.24-Kabel K_{V.24} und die Luftschnittstelle LSS übertragen werden.

Die vom Benutzer der Datenendeinrichtung DEE veränderbare, der Datenendeinrichtung DEE und der Datenübertragungseinrichtung DÜE bekannte zeitkritische ESCAPE-Sequenz STI wird den V.24-Datenübertragungsgeräten DÜG1, DÜG2 bekanntgemacht, indem
1. wenn die ESCAPE-Sequenz STI nicht geändert worden ist, die ESCAPE-Sequenz STI in den V.24-Datenübertragungsgeräten DÜG1, DÜG2 vorkonfiguriert wird oder
2. wenn die ESCAPE-Sequenz STI geändert worden ist, vorzugsweise das erste V.24-Datenübertragungsgerät DÜG1 die in einem Kommandodatenübertragungsmodus der Datenendeinrichtung DEE, der Datenübertragungseinrichtung DÜE und der V.24-Datenübertragungsgeräte DÜG1, DÜG2 in einem Kommandodatenstrom KDS von der Datenendeinrichtung DEE zur Datenübertragungseinrichtung DÜE übertragene geänderte ESCAPE-Sequenz STI ermittelt und dem-zweiten V.24-Datenübertragungsgerät DÜG2 diese geänderte Steuerinformation STI mitteilt.

Alternativ zu 2. ist es auch möglich, daß
(i) das zweite V.24-Datenübertragungsgerät DÜG2 die in dem Kommandodatenübertragungsmodus der Datenendeinrichtung DEE, der Datenübertragungseinrichtung DÜE und der V.24-Datenübertragungsgeräte DÜG1, DÜG2 in dem Kommandodatenstrom KDS von der Datenendeinrichtung DEE zur Datenübertragungseinrichtung DÜE übertragene geänderte ESCAPE-Sequenz STI ermittelt und dem ersten V.24-Datenübertragungsgerät DÜG1 diese geänderte ESCAPE-Sequenz STI mitteilt, oder
(ii) die beiden V.24-Datenübertragungsgerät DÜG1, DÜG2 die in dem Kommandodatenübertragungsmodus der Datenendeinrichtung DEE, der Datenübertragungseinrichtung DÜE und der V.24-Datenübertragungsgeräte DÜG1, DÜG2 in dem Kommandodatenstrom KDS von der Datenendeinrichtung DEE zur Datenübertragungseinrichtung DÜE übertragene geänderte ESCAPE-Sequenz STI ermitteln.

Im Fall (ii) erfolgt dann keine Übertragung der ESCAPE-Sequenz STI zwischen den V.24-Datenübertragungsgeräten DÜG1, DÜG2.

In dem Nutzdatenübertragungsmodus der Datenendeinrichtung DEE, der Datenübertragungseinrichtung DÜE und der V.24-Datenübertragungsgeräte DÜG1, DÜG2 ermittelt das erste V.24-Datenübertragungsgerät DÜG1 aus dem von der Datenendeinrichtung DEE zur Datenübertragungseinrichtung DÜE gesendeten Nutzdatenstrom NDS
eine erste IST-Pausenzeit I-PZ1 der ersten Übertragungspause ÜTP1 der ESCAPE-Sequenz STI, die der Übertragung des ersten Zeichens des Zeichensatzes ZSA der ESCAPE-Sequenz STI unmittelbar voreilt und
eine zweite IST-Pausenzeit I-PZ2 der zweiten Übertragungspause ÜTP2 der ESCAPE-Sequenz STI, die der Übertragung des letzten Zeichens des Zeichensatzes ZSA unmittelbar nacheilt.

Das erste V.24-Datenübertragungsgerät DÜG1 vergleicht die erste IST-Pausenzeit I-PZ1 mit der ersten SOLL-Pausenzeit S-PZ1 und die zweite IST-Pausenzeit I-PZ2 mit der zweiten SOLL-Pausenzeit S-PZ2.

Wenn als Vergleichsergebnis die erste IST-Pausenzeit I-PZ1 größer gleich als die erste SOLL-Pausenzeit S-PZ1 ist bzw. die zweite IST-Pausenzeit I-PZ2 größer gleich als die zweite SOLL-Pausenzeit S-PZ2 ist, überträgt das erste V.24-Datenübertragungsgerät DÜG1 in dem Nutzdatenübertragungsmodus mittels Signalisierung SIG eine Sonderinformation SIF an das zweite V.24-Datenübertragungsgerät DÜG2, mit der das erste V.24-Datenübertragungsgerät DÜG1 dem zweiten V.24-Datenübertragungsgerät DÜG2 dieses Vergleichsergebnis mitteilt.

In dem Nutzdatenübertragungsmodus überträgt das zweite V.24-Datenübertragungsgerät DÜG2 an die Datenübertragungseinrichtung DÜE den Nutzdatenstrom NDS, in dem
die erste Übertragungspause ÜTP1 mit einer dritten IST-Pausenzeit I-PZ3 der Übertragung des ersten Zeichens des Zeichensatzes ZSA unmittelbar voreilt, wobei die dritte IST-Pausenzeit I-PZ3 größer gleich als die erste SOLL-Pausenzeit S-PZ1 ist und
die zweite Übertragungspause ÜTP2 mit einer vierten IST-Pausenzeit I-PZ4 der Übertragung des letzten Zeichens des Zeichensatzes ZSA unmittelbar nacheilt, wobei die vierte IST-Pausenzeit I-PZ4 größer gleich als die zweite SOLL-Pausenzeit S-PZ2 ist.

Die erste IST-Pausenzeit I-PZ1 und die zweite IST-Pausenzeit I-PZ2 sind wie die dritte IST-Pausenzeit I-PZ3 und die vierte IST-Pausenzeit I-PZ4 und wie die erste SOLL-Pausenzeit S-PZ1 und die zweite SOLL-Pausenzeit S-PZ2 vorzugsweise identisch.

## Patentansprüche

1. Verfahren zum Steuern der Datenübertragung in einem schnurlosen zwischen einer Datenendeinrichtung und einer Datenübertragungseinrichtung zur Daten-Telekommunikation betriebenen V.24-Datenübertragungssystem, wobei
das V.24-Datenübertragungssystem ein erstes V.24-Datenübertragungsgerät (DÜG1) und ein zweites V.24-Datenübertragungsgerät (DÜG2) aufweist, die über eine Luftschnittstelle (LSS) miteinander verbunden sind und wobei das erste V.24-Datenübertragungsgerät (DÜG1) mit der Datenendeinrichtung (DEE), das zweite V.24-Datenübertragungsgerät (DÜG2) mit der Datenübertragungseinrichtung (DÜE) und die Datenübertragungseinrichtung (DÜE) mit einer fernen Datenübertragungseinrichtung DÜE_{f}) mit einer nachgeschalteten fernen Datenendeinrichtung (DEE_{f}) verbunden sind,
mit folgenden Merkmalen:
(a) Eine vom Benutzer der Datenendeinrichtung (DEE) veränderbare, der Datenendeinrichtung (DEE) und der Datenübertragungseinrichtung (DÜE) bekannte zeitkritische Steuerinformation (STI) wird den V.24-Datenübertragungsgeräten (DÜG1, DÜG2) bekanntgemacht,
indem bei einer unveränderten Steuerinformation (STI) die Steuerinformation (STI) in den V.24-Datenübertragungsgeräten (DÜG1, DÜG2) vorkonfiguriert wird oder
indem bei einer geänderten Steuerinformation (STI) mindestens eins der V.24-Datenübertragungsgeräte (DÜG1, DÜG2) die in einem Kommandodatenübertragungsmodus der Datenendeinrichtung (DEE), der Datenübertragungseinrichtung (DÜE) und der V.24-Datenübertragungsgeräte (DÜG1, DÜG2) in einem Kommandodatenstrom (KDS) von der Datenendeinrichtung (DEE) zur Datenübertragungseinrichtung (DÜE) übertragene geänderte Steuerinformation (STI) ermittelt und falls erforderlich dem jeweils anderen V.24-Datenübertragungsgerät (DÜG1, DÜG2) diese geänderte Steuerinformation (STI) überträgt bzw. mitteilt,
(b) in einem Nutzdatenübertragungsmodus der Datenendeinrichtung (DEE), der Datenübertragungseinrichtung (DÜE) und der V.24-Datenübertragungsgeräte (DÜG1, DÜG2) ermittelt das erste V.24-Datenübertragungsgerät (DÜG1) aus einem von der Datenendeinrichtung (DEE) zur Datenübertragungseinrichtung (DÜE) gesendeten Nutzdatenstrom (NDS)
eine erste IST-Pausenzeit (I-PZ1) einer ersten Übertragungspause (ÜTP1) der Steuerinformation (STI), die der Übertragung des ersten Zeichens eines Zeichensatzes (ZSA) der Steuerinformation (STI) unmittelbar voreilt und
eine zweite IST-Pausenzeit (I-P22) einer zweiten Übertragungspause (ÜTP2) der Steuerinformation (STI), die der Übertragung des letzten Zeichens des Zeichensatzes (ZSA) unmittelbar nacheilt,
(c) das erste V.24-Datenübertragungsgerät (DÜG1) vergleicht die erste IST-Pausenzeit (I-PZ1) mit einer ersten SOLL-Pausenzeit (S-PZ1) und die zweite IST-Pausenzeit mit einer zweiten SOLL-Pausenzeit (S-PZ2) ,
(d) wenn als Vergleichsergebnis die erste IST-Pausenzeit (I-PZ1) größer gleich als die erste SOLL-Pausenzeit (S-PZ1) ist bzw. die zweite IST-Pausenzeit (I-PZ2) größer gleich als die zweite SOLL-Pausenzeit (S-PZ2) ist, überträgt das erste V.24-Datenübertragungsgerät (DÜG1) in dem Nutzdatenübertragungsmodus mittels Signalisierung (SIG) eine Sonderinformation (SIF) an das zweite V.24-Datenübertragungsgerät (DÜG2), mit der das erste V.24-Datenübertragungsgerät (DÜG1) dem zweiten V.24-Datenübertragungsgerät (DÜG2) dieses Vergleichsergebnis mitteilt,
(e) in dem Nutzdatenübertragungsmodus überträgt das zweite V.24-Datenübertragungsgerät (DÜG2) an die Datenübertragungseinrichtung (DÜE) den Nutzdatenstrom (NDS), in dem die erste Übertragungspause (ÜTP1) mit einer dritten IST-Pausenzeit (I-PZ3) der Übertragung des ersten Zeichens des Zeichensatzes (ZSA) unmittelbar voreilt, wobei die dritte IST-Pausenzeit (I-PZ3) größer gleich als die erste SOLL-Pausenzeit (S-PZ1) ist und
die zweite Übertragungspause (ÜTP2) mit einer vierten IST-Pausenzeit (I-PZ4) der Übertragung des letzten Zeichens des Zeichensatzes (ZSA) unmittelbar nacheilt, wobei die vierte IST-Pausenzeit (I-PZ4) größer gleich als die zweite SOLL-Pausenzeit S-PZ2) ist.

2. Verfahren nach Anspruch 1, **dadurch gekennzeichnet, daß**
eine ESCAPE-Datenfolge als zeitkritisches Steuerkommando durch die Steuerinformation (STI) mit dem Zeichensatz (ZSA) und den Übertragungspausen (ÜTP1, ÜTP2) mit den IST-Pausenzeiten bzw. SOLL-Pausenzeiten gebildet wird.

3. Verfahren nach Anspruch 1 oder 2, **dadurch gekennzeichnet, daß**
die erste IST-Pausenzeit (I-PZ1) und die zweite IST-Pausenzeit (I-PZ2) identisch sind, die dritte IST-Pausenzeit (I-PZ3) und die vierte IST-Pausenzeit (I-PZ4) identisch sind und die erste SOLL-Pausenzeit (S-PZ1) und die zweite SOLL-Pausenzeit (S-PZ2) identisch sind.

4. Verfahren nach einem der Ansprüche 1 bis 3, **dadurch gekennzeichnet, daß**
die Kommandodaten Hayes-spezifische Kommandos mit dem Hayes-Prefix "AT (Attention)" sind.

5. Verfahren nach einem der Ansprüche 1 bis 4, **dadurch gekennzeichnet, daß**
ein Modem als Datenübertragungseinrichtung und ein Personal Computer als Datenendeinrichtung verwendet werden.

6. Verfahren nach einem der Ansprüche 1 bis 5, **dadurch gekennzeichnet, daß**
eine DECT-Luftschnittstelle als Luftschnittstelle verwendet wird.

## Claims

1. Method for controlling data transmission in a wireless V.24 data transmission system operating between a data terminal and a data transmission device for data telecommunication, in which the V.24 data transmission system has a first V.24 data transmission apparatus (DÜG1) and a second V.24 data transmission apparatus (DÜG2) which are interconnected via an air interface (LSS), and in which the first V.24 data transmission apparatus (DÜG1) is connected to the data terminal (DEE), the second V.24 data transmission apparatus (DÜG2) is connected to the data transmission device (DÜE) and the data transmission device (DÜE) is connected to a remote data transmission device (DÜE_{f}) having a downstream remote data terminal (DEE_{f}), having the following features:
(a) time-critical control information (STI), which can be changed by the user of the data terminal (DEE) and is known to the data terminal (DEE) and to the data transmission device (DÜE), is made known to the V.24 data transmission apparatuses (DÜG1, DÜG2),
in that if the control information (STI) is unchanged, the control information (STI) is preconfigured in the V.24 data transmission apparatuses (DÜG1, DÜG2), or
in that if the control information (STI) has been changed, at least one of the V.24 data transmission apparatuses (DÜG1, DÜG2) determines the changed control information (STI) transmitted in a command data transmission mode of the data terminal DEE, the data transmission device DÜE and the V.24 data transmission apparatuses (DÜG1, DÜG2) in a command data stream KDS from the data terminal DEE to the data transmission device DÜE, and if necessary transmits or notifies the respective other V.24 data transmission apparatus (DÜG1, DÜG2) of this changed control information (STI);
(b) in a user data transmission mode of the data terminal (DEE), the data transmission device (DÜE) and the V.24 data transmission apparatuses (DÜG1, DÜG2), the first V.24 data transmission apparatus (DÜG1) determines from a user data stream (NDS) sent from the data terminal (DEE) to the data transmission device (DÜE) a first actual pause time (I-PZ1) of a first transmission pause (ÜTP1) of the control information (STI) which immediately precedes the transmission of a first character of a character set (ZSA) of the control information (STI), and a second actual pause time (I-PZ2) of a second transmission pause (ÜTP2) of the control information (STI) which immediately follows the transmission of the last character of the character set (ZSA);
(c) the first V.24 data transmission apparatus (DÜG1) compares the first actual pause time (I-PZ1) with a first nominal pause time (S-PZ1) and the second actual pause time with a second nominal pause time (S-PZ2);
(d) if the result of the comparison is that the first actual pause time (I-PZ1) is greater than or equal to the first nominal pause time (S-PZ1) or the second actual pause time (I-PZ2) is greater than or equal to the second nominal pause time (S-PZ2), by means of signalling (SIG) the first V.24 data transmission apparatus (DÜG1) transmits in the user data transmission mode special information (SIF) to the second V.24 data transmission apparatus (DÜG2) with which the first V.24 data transmission apparatus (DÜG1) notifies the second V.24 data transmission apparatus (DÜG2) of the results of this comparison;
(e) in the user data transmission mode the second V.24 data transmission apparatus (DÜG2) transmits to the data transmission device (DÜE) the user data stream (NDS), in which
the first transmission pause (ÜTP1) having a third actual pause time (I-PZ3) immediately precedes the transmission of the first character of the character set (ZSA), in which the third actual pause time (I-PZ3) is greater than or equal to the first nominal pause time (S-PZ1), and
the second transmission pause (ÜTP2) having a fourth actual pause time (I-PZ4) immediately follows the transmission of the last character of the character set (ZSA), in which the fourth actual pause time (I-PZ4) is greater than or equal to the second nominal pause time S-PZ2).

2. Method according to Claim 1, **characterized in that** an ESCAPE data sequence is formed as time-critical control command from the control information (STI) with the character set (ZSA) and the transmission pauses (ÜTP1, ÜTP2) having the actual pause times or nominal pause times respectively.

3. Method according to Claim 1 or 2, **characterized in that** the first actual pause time (I-PZ1) and the second actual pause time (I-PZ2) are identical, the third actual pause time (I-PZ3) and the fourth actual pause time (I-PZ4) are identical, and the first nominal pause time (S-PZ1) and the second nominal pause time (S-PZ2) are identical.

4. Method according to one of Claims 1 to 3, **characterized in that** the command data are Hayes-specific commands having the Hayes prefix "AT (Attention)".

5. Method according to one of Claims 1 to 4, **characterized in that** a modem is used as the data transmission device and a personal computer is used as the data terminal.

6. Method according to one of Claims 1 to 5, **characterized in that** a DECT air interface is used as the air interface.

## Revendications

1. Procédé pour commander la transmission de données dans un système de transmission de données V.24 sans fil exploité entre un terminal et un dispositif de transmission de données pour la télécommunication de données, le système de transmission de données V.24 comportant un premier appareil de transmission de données V.24 (DÜG1) et un second appareil de transmission de données V.24 (DÜG2), qui sont interconnectés par une interface radio (LSS) et le premier appareil de transmission de données V.24 (DÜG1) étant connecté au terminal de transmission de données (DEE), le second appareil de transmission de données V.24 (DÜG2) avec le dispositif de transmission de données (DÜE) et le dispositif de transmission de données (DÜE) avec un dispositif de transmission de données à distance (DÜE_{f}) à un terminal de transmission de données à distance (DEE_{F}) installé en aval, présentant les caractéristiques suivantes :
(a) une information de commande (STI) critique dans le temps, modifiable par l'utilisateur du terminal de transmission de données (DEE) et connue du terminal de transmission de données (DEE) et du dispositif de transmission de données (DÜE) est communiquée aux appareils de transmission de données V.24 (DÜG1, DÜG2), en préconfigurant l'information de commande (STI) dans les appareils de transmission de données V.24 (DÜG1, DÜG2), avec une information de commande inchangée (STI), ou en ce que avec une information de commande modifiée (STI) au moins un des appareils de transmission de données V.24 (DÜG1, DÜG2) détermine l'information de commande modifiée transmise dans un mode de transmission d'instructions au terminal de transmission de données (DEE), au dispositif de transmission de données (DÜE) et aux appareils de transmission de données V.24 (DÜG1, DÜG2) dans un flux de données d'instructions (KDS) du terminal de transmission de données (DEE) jusqu'au dispositif de transmission de données (DÜE) et transmet ou communique si nécessaire l'information de commande modifiée (STI) à l'autre appareil de transmission de données V.24 (DÜG1, DÜG2) respectivement,
(b) dans un mode de transmission de données utiles du terminal de transmission de données (DEE), du dispositif de transmission de données (DÜE) et des appareils de transmission de données V.24 (DÜG1, DÜG2), le premier appareil de transmission de données V.24 (DÜG1) détermine à partir d'un flux de données utiles (NDS) émis par le dispositif de transmission de données (DEE) vers le dispositif de transmission de données (DÜE) un premier temps de pause EFFECTIF (I-PZ1) d'une première pause de transmission (ÜTP1) de l'information de commande (STI), qui précède directement la transmission du premier caractère d'un jeu de caractères (ZSA) de l'information de commande (STI) et un second temps de pause EFFECTIF (I-PZ2) d'une deuxième pause de transmission (ÜTP2) de l'information de commande (STI) qui succède directement à la transmission du dernier caractère du jeu de caractères (ZSA),
(c) Le premier appareil de transmission de données V.24 (DÜG1) compare le premier temps de pause EFFECTIF (I-PZ1) à un premier temps de pause de CONSIGNE (S-PZ1) et le premier temps de pause EFFECTIF à un second temps de pause de CONSIGNE (S-PZ2),
(d) si, en tant que résultat de la comparaison, le premier temps de pause EFFECTIF (I-PZ1) est plus grand que le premier temps de pause de CONSIGNE (S-PZ1) ou égal à celui-ci ou si le deuxième temps de pause EFFECTIF (I-PZ2) est supérieur au deuxième temps de pause de CONSIGNE (S-PZ2) ou égal à celui-ci, le premier appareil de transmission de données V.24 (DÜG1) transmet dans le mode de transmission de données utiles au moyen de la signalisation (SIG) une information spéciale (SIF) au deuxième appareil de transmission de données V.24 (DÜG2), avec laquelle le premier appareil de transmission de données V.24 (DÜG1) communique le résultat de la comparaison au deuxième appareil de transmission de données V.24 (DÜG2),
(e) dans le mode de transmission de données utiles, le deuxième appareil de transmission de données V.24 (DÜG2) transmet au dispositif de transmission de données (DÜE) le flux de données utiles (NDS), dans lequel la première pause de transmission (ÜTP1) précède directement la transmission du premier caractère du jeu de caractères (ZSA) d'un troisième temps de pause EFFECTIF (I-PZ3), le troisième temps de pause EFFECTIF (I-PZ3) étant supérieur au premier temps de pause de CONSIGNE (S-PZ1) ou égal à celui-ci et la deuxième pause de transmission (ÜTP2) succède directement à la transmission du dernier caractère du jeu de caractères (ZSA) d'un quatrième temps de pause EFFECTIF (I-PZ4), le quatrième temps de pause EFFECTIF (I-PZ4) étant supérieur au deuxième temps de pause de CONSIGNE (S-PZ2) ou égal à celui-ci.

2. Procédé selon la revendication 1, **caractérisé en ce que** une séquence de données ESCAPE est formée comme instruction de commande critique dans le temps dans l'information de commande (STI) avec le jeu de caractères (ZSA) et les pauses de transmission (ÜTP1, ÜTP2) avec les temps de pause EFFECTIFS ou de CONSIGNE.

3. Procédé selon la revendication 1 ou 2, **caractérisé en ce que** le premier temps de pause EFFECTIF (I-PZ1) et le deuxième temps de pause EFFECTIF (I-PZ2) sont identiques, le troisième temps de pause EFFECTIF (I-PZ3) et le quatrième temps de pause EFFECTIF (I-PZ4) sont identiques et le premier temps de pause de CONSIGNE (S-PZ1) et le deuxième temps de pause de CONSIGNE (S-PZ2) sont identiques.

4. Procédé selon l'une des revendications 1 à 3, **caractérisé en ce que** les données d'instructions sont des instructions spécifiques de Hayes avec le préfixe de Hayes "AT (Attention)".

5. Procédé selon l'une des revendications 1 à 4, **caractérisé en ce qu'**un modem est utilisé comme dispositif de transmission de données et un ordinateur personnel comme terminal de transmission de données.

6. Procédé selon l'une des revendications 1 à 5, **caractérisé en ce qu'**une interface radio DECT est utilisée comme interface radio.
